Europäisches Patentamt

European Patent Office

Office européen des brevets

(11) Numéro de publication: **0 480 309 A1**

## DEMANDE DE BREVET EUROPEEN

(21) Numéro de dépôt: **91116860.7**

(22) Date de dépôt: **02.10.91**

(51) Int. Cl.5: **H02P 5/418**

(30) Priorité: **12.10.90 FR 9012631**

(43) Date de publication de la demande:
**15.04.92 Bulletin 92/16**

(84) Etats contractants désignés:
**BE DE ES GB IT NL SE**

(71) Demandeur: **MOULINEX**
**11, rue Jules-Ferry**
**F-93170 Bagnolet(FR)**

(72) Inventeur: **Arroubi, Mustapha**
**Moulinex, 2, rue de l'Industrie**
**F-14123 Cormelles-le-Royal(FR)**
Inventeur: **Parise, Vital André**
**Moulinex, 2, rue de l'Industrie**
**F-14123 Cormelles-le-Royal(FR)**

(74) Mandataire: **May, Hans Ulrich, Dr.**
**Patentanwalt Dr. H.U. May Thierschstrasse**
**27**
**W-8000 München 22(DE)**

(54) **Dispositif électronique de régulation de la vitesse d'un moteur à collecteur du type universel pour un appareil électroménager de traitement des aliments.**

(57) L'invention concerne un dispositif de régulation d'un moteur à collecteur du type universel pour robot de cuisine.

Pour limiter les variations de la vitesse de rotation du moteur (11) entraînant une apparition de bruits, le dispositif de régulation selon l'invention comporte des moyens de mesure (3) de la vitesse du moteur, des moyens de conversion (4) numérique/analogique des moyens de mesure de la vitesse de rotation du moteur, et des moyens de commande (6) permettant d'une part de comparer la vitesse de rotation du moteur (11) à une vitesse de rotation de consigne sélection-née par un dispositif de consigne (12) du moteur et, d'autre part, d'agir sur un variateur (11) de vitesse lié au moteur afin de maintenir ladite vitesse de rotation du moteur dans une plage dont la limite supérieure est une vitesse haute Na.

Application à tout moteur à collecteur du type uni-versel équitant des appareils ménagers.

FIG.2

Rank Xerox (UK) Business Services

EP 0 480 309 A1

L'invention concerne le fonctionnement d'un moteur à collecteur du type universel équipant des appareils ménagers à fonctions multiples pour le traitement des aliments. Elle concerne, plus particulièrement, un dispositif électronique de régulation de la vitesse d'un tel moteur.

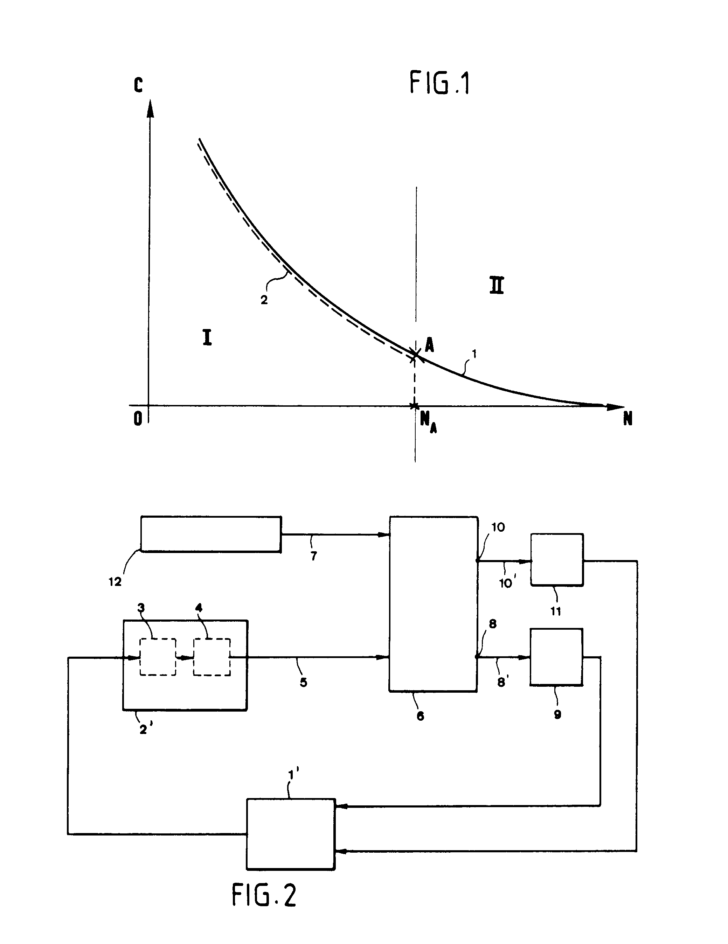

Les moteurs montés généralement sur lesdits appareils électroménagers, fournissent une puissance mécanique matérialisée par l'existence simultanée d'une vitesse et d'un couple. Ces deux paramètres sont liés par une relation linéaire : C = F(N) où C : couple et N : vitesse du moteur. Comme illustré sur la figure 1, la courbe 1 représente la relation couple-vitesse typique d'un moteur sans variateur de vitesse équipant un appareil électroménager. Suivant les fonctions que l'on souhaite obtenir sur l'appareil électroménager, par exemple, si l'on désire utiliser un accessoire presse-agrumes, ou un hachoir ou tout autre outil de travail, il est indispensable de faire tourner le moteur à une vitesse déterminée d'entraînement propre à chaque fonction, cette vitesse étant sélectionnée par un système prévu à cet effet. Le passage d'un fonctionnement en charge à un fonctionnement à vide entraîne généralement une augmentation de la vitesse de rotation du moteur, c'est-à-dire une apparition de bruits. Par conséquent, il faut limiter les variations de la vitesse de rotation du moteur entre son fonctionnement en charge et son fonctionnement à vide pour supprimer ces bruits. Une limite supérieure du fonctionnement en charge de la vitesse de rotation du moteur est Na. Une zone I représentée à gauche d'une droite (ANa) parallèle à la droite d'ordonnée représente la zone de fonctionnement en charge de l'appareil électroménager. Une zone II représentée à droite de la droite (ANa), représente la zone de fonctionnement à vide de l'appareil électroménager. La vitesse de rotation Na du moteur au point A est sensiblement de 8000 tr/mn. Les appareils électroménagers sont généralement équipés de variateurs classiques qui ne permettent pas de régler suffisamment la vitesse de rotation du moteur en limitant le point de fonctionnement du moteur de l'appareil électroménager à une vitesse de rotation constante, et ce, quelque soit le couple exercé.

Le but de l'invention est de remédier à ces inconvénients en appliquant audit moteur un dispositif de régulation de vitesse permettant lors d'une variation de couple, de limiter la variation de la vitesse de rotation du moteur pour supprimer les bruits issus des variations provoquées par le fonctionnement du moteur dans la zone II.

Selon l'invention, le dispositif est **caractérisé en ce** qu'il comporte

- des moyens de mesure de la vitesse de rotation du moteur délivrant une information numérique.

- des moyens de conversion numérique/analogique des moyens de mesure de la vitesse de rotation du moteur ;
- et des moyens de commande permettant, d'une part, de comparer la vitesse de rotation du moteur issue desdits moyens de conversion à une vitesse de rotation de consigne du moteur sélectionnée par un dispositif de consigne en fonction du mode de fonctionnement en charge choisi pour l'appareil électroménager et, d'autre part, d'agir sur un variateur de vitesse lié au moteur afin de maintenir ladite vitesse de rotation du moteur dans une plage dont la limite supérieure est une vitesse haute Na.

Grâce au dispositif selon l'invention, les vitesses supérieures à la vitesse haute Na ne sont plus atteintes ce qui limite les bruits désagréables à l'utilisateur. La rotation couple-vitesse d'un tel moteur selon l'invention est représentée par la courbe 2 en pointillés.

Les caractéristiques et avantages de l'invention ressortiront d'ailleurs de la description qui va suivre, à titre d'exemple, en référence aux dessins annexés dans lesquels :

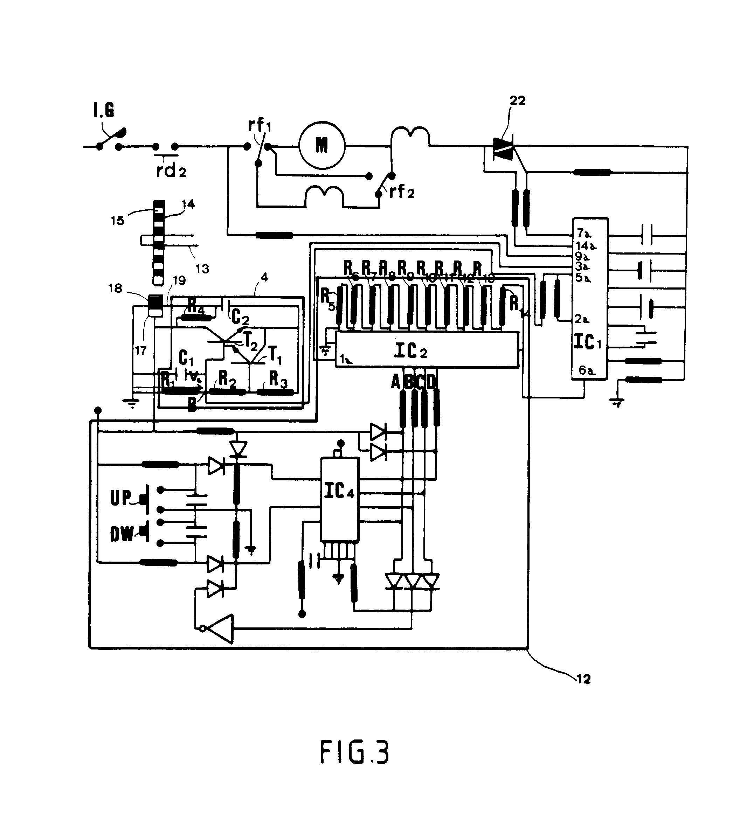

la figure 1 représente une première courbe 1 de la relation couple-vitesse typique d'un moteur à collecteur du type universel sans variateur de vitesse et une deuxième courbe 2 de la relation couple-vitesse d'un moteur qui est équipé du dispositif selon l'invention ; la figure 2 représente un synoptique de fonctionnement d'un dispositif de régulation de la vitesse de rotation du moteur, selon l'invention ; la figure 3 représente un exemple d'un mode de réalisation du dispositif de régulation de la vitesse de rotation du moteur selon l'invention.

Comme représenté sur le synoptique de la figure 2, un moteur 1' d'un appareil électro-ménager à multifonctions pour le traitement des aliments, est relié directement à un système de mesure 2' de la vitesse du moteur. Ce système de mesure 2' comprend, par exemple, un premier moyen de mesure 3 permettant de capter la vitesse du moteur et un deuxième moyen 4 convertissant la fréquence issue du premier moyen 3 en une tension 5. Un exemple de réalisation des moyens 3 et 4 sera décrit ultérieurement. La tension 5 provenant du système de mesure 2' est insérée sur une des entrées des moyens de commande 6 qui, sur une autre entrée, reçoivent une vitesse de consigne de rotation du moteur sous une tension 7. Cette vitesse de consigne de rotation du moteur est déterminée par un dispositif de consigne de vitesse de moteur 12 qui, lors d'un changement d'accessoire de travail, permet une adaptation de la vitesse de rotation au mode de fonctionnement désiré. Les moyens de commande 6, comparent ainsi les deux vitesses de rotation du moteur. Une première sortie 8 des moyens de commande 6 envoie un signal de sortie 8' qui déclenche ou non un dispositif de commande 9 d'alimentation lié au moteur 1'. Une deuxième sortie 10 des moyens de commande 6 envoie un deuxième signal 10' qui déclenche ou non une commande d'un variateur de vitesse 11 lié au moteur 1'.

La figure 3 représente un exemple d'un mode de réalisation du dispositif de régulation selon l'invention. Un moteur M lié à un dispositif de sécurité et de mise sous tension de l'appareil électroménager (IG, rd2, rf1, rf2) est mis en rotation ; une vitesse de consigne de rotation du moteur Vcm est comprise dans la zone I définie précédemment. Le moteur M possède un arbre 13 sur lequel est placé un premier élément du système 3 permettant de capter la vitesse de rotation du moteur. Ce premier élément est, par exemple, une roue dentée 14 comprenant des dents 15 espacées, chacune, par des creux 16. De manière connue en soi, d'autres premiers éléments du système 3, non représentés, permettant de capter la vitesse de rotation, par exemple une roue aimantée ou un disque perforé, peuvent être utilisés pour se substituer à la roue dentée 14. Des deuxièmes éléments, par exemple des capteurs, capteur-aimants ou optocoupleurs sont associés à chaque type de premiers éléments choisis pour capter une information. La roue dentée 14 est associée, par exemple, à un capteur à effet Hall 17 muni d'un aimant 18. La mise en rotation du moteur M entraîne la roue dentée 14 ; les dents 15 ou les creux de dents 16 se présentent successivement en face du capteur 17 faisant varier ainsi la concentration du champ magnétique. A chaque fois qu'une dent 15 se présente en face du capteur 17, une information est envoyée à une entrée 19 des moyens de conversion 4 numérique/analogique à "conversion continue". Ces moyens de conversion 4 comportent, par exemple, deux condensateurs C1 et C2, deux transistors T1et T2 et quatre résistances R1, R2, R3 et R4. L'entrée 19 du convertisseur 20 reçoit une fréquence d'entrée qui ne peut être supérieure à une valeur déterminée par les valeurs numériques des condensateurs C1 et C2 ; cette fréquence d'entrée est convertie en tension analogique de sortie Vs. La fréquence d'entrée dépend de la forme du premier élément, par exemple de la roue dentée 14, mais aussi de la vitesse de rotation de ce dit premier élément qui n'est autre que la vitesse de rotation du moteur , ledit premier élément étant solidaire de l'arbre 13 du moteur. La tension analogique de sortie VS est la tension appliquée aux bornes des condensateurs C1 ainsi qu'aux bornes de la résistance R1 montée en parallèle sur ledit condensateur C1 et déterminée au point B. La tension VS suit les variations de la vitesse de rotation du moteur. En effet, l'ensemble premier et deuxième élément, par exemple roue dentée 14-capteur 17 - aimant 18, envoie un signal carré à une fréquence qui est l'image de la vitesse de rotation du moteur M. La tension de sortie à cet instant est Vso. Entre deux fronts montants du signal capteur, le condensateur C1 se décharge dans la résistance R1, ce qui provoque en sortie une chute de tension $\delta$ Vso. Lors d'un niveau bas (Vb) du signal capteur, le condensateur C2 se charge à travers le transistor T2 à une tension sensiblement égale à -(Vso- $\delta$ Vso). Lors d'un niveau haut (Vh) du signal capteur, le condensateur C2 se charge mais dans le sens opposé. Or cette charge provoque un complément de charge du condensateur C2. Ce dernier retrouve ainsi sa charge initiale Vso alors que le condensateur C2 se charge à une tension égale à (Vh - Vso). Tant que la fréquence de rotation du moteur ne change pas, le fonctionnement du moteur continue autour du point Vs0.

Lorsque la vitesse de rotation du moteur tend à diminuer, la fréquence du signal capteur diminue et sa période augmente. Or, le condensateur C1 se décharge durant toute la période, ainsi la chute de tension au bord du condensateur C1 va être plus grande. Lorsque le niveau haut Vh du signal arrive, le condensateur C1 a un complément de charge ; ce complément de charge est insuffisant pour ramener la tension de sortie à Vso. En effet, lorsque le condensateur C1 se charge, le condensateur C2 se charge, mais ce dernier se charge beaucoup plus rapidement que le condensateur C1, car les valeurs numériques VC1 et VC2 données respectivement aux condensateurs C1 et C2 sont telles que VC1 VC2. Ainsi la tension Vs diminue alors que la vitesse de consigne du moteur Vcm est restée constante. La vitesse de consigne du moteur Vcm est donnée, par exemple, par le dispositif de sélection 12. Ce dispositif de consigne 12 comporte, par exemple, deux boutons poussoirs Up et Dw, l'un servant à incrémenter (Up), l'autre servant à décrémenter (Dw). L'un ou l'autre de ces deux boutons poussoirs envoie une impulsion sur l'une des entrées, par exemple, d'un compteur IC4 : ce compteur IC4 permet de piloter, par exemple, un potentiomètre à commande numérique comprenant un circuit intégré IC2, par exemple, un multiplexeur numérique CD 4067 qui est un composant connu. En effet, les entrées A, B, C, et D du circuit intégré IC2 sont reliées à des sorties E, F, G et H du compteur IC4. Des résistances R5, R6, R7, R8, R9, R10, R11, R12, R13, R14, sont placées entre chaque entrée/sortie correspondante du circuit intégré IC2. La résistance totale du potentiomètre est donc $(R_5 + R_6 .. + R_{14})$. Les valeurs des résistances (R5 à R14) sont déterminées pour que la vitesse de consigne de rotation du moteur soit comprise dans la zone I prédéterminée, c'est-à-dire dans la zone correspondant au fonctionnement de l'appareil électroménager en charge. Suivant les valeurs (0 ou 1) présentes sur les entrées A, B, C et D du circuit intégré IC2, les résistances R5 à R14 sont sélectionnées, ce qui permet d'obtenir une valeur de consigne de vitesse de rotation du moteur déterminée. Cette dite valeur est envoyée sur un moyen de commande comprenant, par exemple, un circuit de commande IC1, par exemple un circuit L120 commercialisé par S.G.S.ATES (THOMSON). La valeur de consigne Vcm est appliquée sur une première entrée 5a du circuit L120 et est comparée à la tension de sortie Vso issue du point B ; cette tension Vso est appliquée sur une deuxième entrée 3a du circuit L120. La sortie du comparateur du circuit L120 s'effectue sur une sortie 2a qui délivre une tension Vd, en cas de différence entre la tension au point B (Vso) et la tension de consigne Vcm. Cette tension Vd, lorsqu'elle existe, est numérisée et délivre, sur une troisième sortie 7a, une impulsion qui est appliquée sur un triac connu 22, monté en série avec le moteur M. Lorsque la tension Vso diminue, la vitesse de consigne étant constante, le circuit IC1 transmet une impulsion en agissant sur la gâchette du triac 22. Le temps mort du triac 22 permet au moteur de tourner plus vite pour retrouver la vitesse initiale. Le processus décrit lorsque la vitesse du moteur tend à diminuer, s'applique de façon inverse lorsque la vitesse du moteur tend à augmenter.

Le dispositif électronique de régulation de la vitesse d'un moteur à collecteur de type universel pour un appareil électroménager à fonctions multiples pour le traitement des aliments, peut s'appliquer également à tout type de moteur à collecteur de type universel pour tout appareil électroménager.

**Revendications**

1. Dispositif électronique de régulation de la vitesse de rotation d'un moteur (M) à collecteur de type universel d'un appareil électroménager à fonctions multiples pour le traitement des aliments,
**caractérisé en ce qu'**il comporte
   - des moyens de mesure (3) de la vitesse de rotation du moteur délivrant une information numérique ;
   - des moyens de conversion (4) numérique/analogique des moyens de mesure de la vitesse de rotation du moteur ;
   - et des moyens de commande (6) permettant, d'une part, de comparer la vitesse de rotation du moteur (M) issue desdits moyens de conversion à une vitesse de rotation de consigne du moteur sélectionnée par un dispositif de consigne (12) en fonction du mode de fonctionnement en charge choisi pour l'appareil électroménager et, d'autre part, d'agir sur un variateur de vitesse lié au moteur afin de maintenir ladite vitesse (11) de rotation du moteur dans une plage dont la limite supérieure est une vitesse haute Na.

2. Dispositif électronique de régulation selon la revendication 1,
**caractérisé en ce que** les moyens de mesure de la vitesse de rotation du moteur comprennent un premier système (3) permettant de capter la vitesse du moteur, et comprenant une roue dentée (14) fixée sur l'arbre (13) du moteur et en face de laquelle est placée en vis-à-vis, un capteur à effet Hall (17) muni d'un aimant (18) et saisissant l'information.

3. Dispositif électronique de régulation selon la revendication 1,
**caractérisé en ce que** les moyens de conversion numérique/analogique des moyens de mesure comportent un deuxième système (4) convertissant une fréquence issue du premier système (3) en une tension (5) appliquée sur les moyens de commande (6).

4. Dispositif électronique de régulation selon la revendication 1,
**caractérisé en ce que** le dispositif de consigne permettant de sélectionner la vitesse de rotation de consigne du moteur comporte deux boutons poussoirs (Up) et (Dw) servant respectivement à incrémenter et décrémenter ladite vitesse, ces boutons poussoirs envoyant une impulsion sur un compteur (IC4) pilotant un potentiomètre numérique (IC2) qui applique sur l'une des entrées, des moyens de commande (6), un signal fonction de ladite vitesse de rotation de consigne du moteur.

# FIG.1

# FIG.2

FIG.3

# Office européen
des brevets

# RAPPORT DE RECHERCHE EUROPEENNE

Numéro de la demande

**EP 91 11 6860**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 568 193 (R.F.CONTRI & AL.) | 1,3 | H 02 P 5/418 |
| Y | (* colonne 3, ligne 33 - ligne 46 * ) | 2 | |
| | * colonne 4, ligne 18 - ligne 27; figure 3 * * | | |
| | — — — | | |
| X | EP-A-0 034 822 (BLACK & DECKER INC.) | 1-3 | |
| | * page 9, ligne 26 - page 10, ligne 20 * | | |
| | * page 13, ligne 17 - ligne 23 * | | |
| | * page 15, ligne 11 - page 16, ligne 3; figures 7-9 * * | | |
| | — — — | | |
| Y | FR-A-2 590 746 (FRIEDRICH DUSS MASCHINENFABRIK & CO.) | 2 | |
| | * revendications 1,2 * * | | |
| | — — — | | |
| A | EP-A-0 041 829 (THORN DOMESTIC APPLIANCES LTD.) | 1,3 | |
| | * page 2, ligne 5 - ligne 9 * | | |
| | * page 5, ligne 16 - ligne 23 * * | | |
| | — — — — — | | |

| DOMAINES TECHNIQUES RECHERCHES (Int. Cl.5) |
|---|
| H 02 P |

Le présent rapport de recherche a été établi pour toutes les revendications

| Lieu de la recherche | Date d'achèvement de la recherche | Examinateur |
|---|---|---|
| Berlin | 22 janvier 92 | LEOUFFRE M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
.............................................................
& : membre de la même famille, document correspondant